# EUROPÄISCHE PATENTSCHRIFT

(11) **EP 0 834 452 B1**
(45) Veröffentlichungstag und Bekanntmachung des Hinweises auf die Patenterteilung: **04.08.2004**
(21) Anmeldenummer: 97116887.7
(22) Anmeldetag: 29.09.1997
(51) Int. Cl.: B64C 1/14, B64C 1/40, B64D 13/00

(54) **Flugzeugtürbereich mit einem Führungssystem von Luftströmen**
Aircraft door with guiding system for air flow
Porte d'aéronef avec un système di guidage pour écoulement d'air

(30) Priorität: 02.10.1996 DE 19640741
(43) Veröffentlichungstag der Anmeldung: 08.04.1998
(73) Patentinhaber: Airbus Deutschland GmbH, 21129 Hamburg (DE)
(72) Erfinder: Scherer, Thomas, Dr.-Ing., 22559 Hamburg (DE); Dreyhaupt, Michael, Dipl.-Ing., 22559 Hamburg (DE); Lütjens, Heiko, Dipl.-Ing., 25421 Pinneberg (DE)
(74) Vertreter: Hansmann, Dierk, Dipl.-Ing.

(56) Entgegenhaltungen:
- EP-A- 0 317 037
- FR-A- 1 328 853
- FR-A- 1 406 512
- US-A- 5 398 889

## Beschreibung

Die Erfindung bezieht sich auf einen Flugzeugtürbereich mit einem Führungssystem von Luftströmen, gemäß dem Oberbegriff des Anspruchs 1.

Es ist bekannt, daß die rumpfinneren Türbereiche eines Flugzeuges eine thermische Schwachstelle darstellen, die sich mit Hilfe von Thermographieaufnahmen genauer quantifizieren lassen. Besonders der bodennahe Bereich der Flugzeugtür-Innenfläche weist bei extrem kalter Außentemperatur außerhalb des Flugzeuges niedrige Oberflächentemperaturen auf, die unangenehm auf Flugpassagiere und Flugbegleitpersonal wirken. Dabei sinken abkühlende Luftströme entlang der Strukturinnenfläche und treten im allgemeinen am Fußbereich in den Innenraum der Kabine(n) bzw. des Cockpitbereiches ein. Durch geeignete Dichtungsmaßnahmen wird bislang ein Anteil der strömenden Kaltluft abgeschottet, jedoch werden damit keine befriedigenden thermischen Verbesserungen erreicht. Messungen im Flugzeug haben sogar gezeigt, daß die Temperatur an der Türinnenseite bei abgedichteten Spalten niedriger ist als mit offenen [Auskühlung, Verhinderung der Zirkulation]. Um ein aktives Heizungssystem zu installieren, bedarf es eines hohen Energieverbrauchs der ohnehin limitierten Energiereserven an Bord eines Flugzeuges, der die Flugzeugbetriebskosten ungünstig belastet und den Einsatz weiterer Kontroll- und Regeleinheiten erfordert.

Demzufolge liegt der Erfindung die Aufgabe zugrunde, ein gattungsgemäßen Flugzeugtürbereich derart zu gestalten, daß durch geeignete wärmetechnische Maßnahmen und Luftführungen innerhalb des Flugzeugtürbereiches eine Verbesserung der thermischen Verhältnisse auf der inneren Oberfläche der Flugzeugtür(en) bei extrem kalten Außenbordtemperaturen erreicht wird. Dabei soll sich der Einsatz weiterer Wärmespender, die den innenliegenden Oberflächenbereich der Flugzeugtür thermisch verbessern, erübrigen.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der Zeichnungen näher beschrieben. Es zeigen
- Fig.1: das Führungssystem von Luftströmen innerhalb des Flugzeugtürbereiches;
- Fig.2: das Detail A des Flugzeugtürbereiches nach Fig.1 mit besonderer Darstellung eines Luftkanals zur Luftführung in den Unterflurbereich des Flugzeuges;
- Fig.3: den Schnitt A - A des Flugzeugtürbereiches nach Fig.1, der den Aufbau des Flugzeugtürbereiches und die Lage eines Luftkanals veranschaulicht.

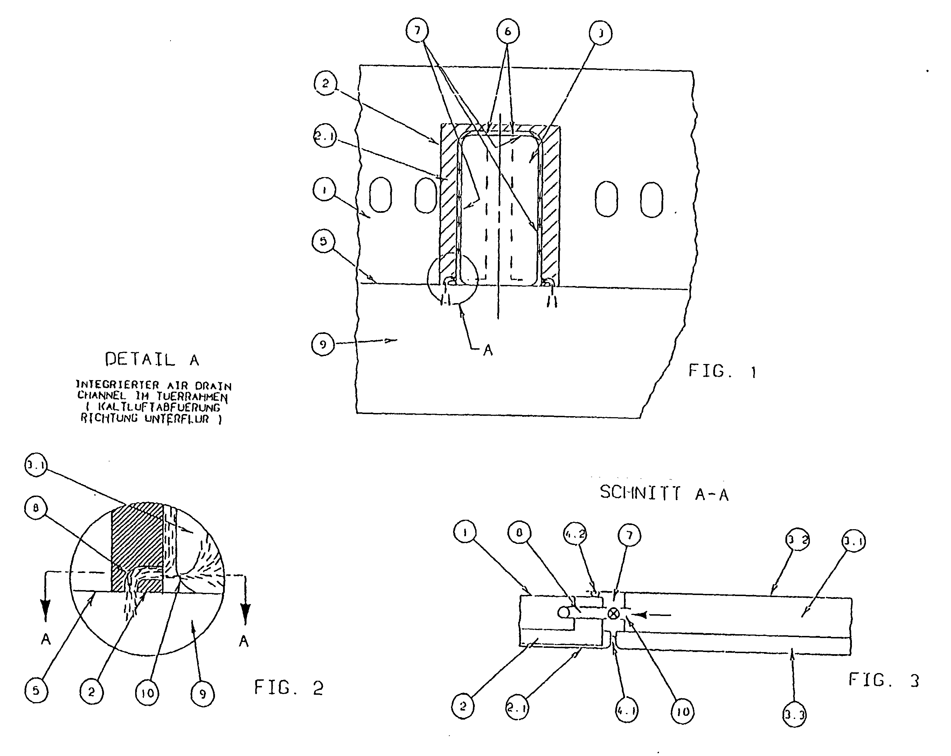

In der Fig.1 ist das Führungssystem von Luftströmen innerhalb des Flugzeugtürbereiches in der Vorderansicht dargestellt. Das in der Fig.2 veranschaulichte Detail A nach der Fig.1 zeigt einen Luftkanal, mit dem die gezielte Ableitung von Luftströmen aus dem Flugzeugtürbereich betrieben wird. Der Schnitt A - A, welcher auszugsweise den bodennahen Teil des Flugzeugtürbereiches nach der Fig.1 in einer Draufsicht widergibt, veranschaulicht den hinter der Türrahmenverkleidung der Flugzeugtür absinkenden Teil abgekühlter Luft, der einem im Türrahmen integrierten Luftkanal zuströmt.

Nach der Fig.1 setzt sich das Führungssystem von Luftströmen folgendermaßen zusammen.

Das Führungssystem bezieht sich definitiv auf einen Türbereich des Flugzeuges, der sich oberhalb der Bodenstruktur 5, die den Unterflurbereich 9 des Flugzeugrumpfes überdeckt, befindet.
Der Flugzeugtürbereich integriert sich (innen-)flächenmäßig aus dem Türrahmen 2 und einer von diesem aufgenommenen Flugzeugtür 3, der den Flugzeugrumpf auskleidet.
Dabei ist der Türrahmen 2 einem der Flugzeugrumpfstruktur 1 ausgenommenen Türausschnitt formschlüssig eingepaßt.

Der Türrahmen 2, dessen Tragkonstruktion einen offenen Türteilbereich aufspannt, nimmt in diesem Teilbereich - formschlüssig eingepaßt - eine Flugzeugtür 3, die der gewölbten Form des Flugzeugrumpfes folgt, auf, welche sich - an (mit) der Tragkonstruktion (einem der beiden Türrahmenständer) befestigt (verriegelt) - beispielgemäß (im entriegelten Zustand) nach außerhalb des Flugzeugrumpfes schwenken läßt.

Ein Vorgriff auf die Fig.3 vervollständigt, daß die Flugzeugtür 3 sich aus mehreren Schichten aufbaut. Sie besteht aus einer Türstruktur 3.1, der eine (äußerer) Beplankung 3.2 und eine (innere) Türverkleidung 3.3 fest aufgesetzt ist.
Die Türstruktur 3.1 ist luftströmungstechnisch mit Hohlräumen durchsetzt, die konkret zwischen einzelnen (nicht dargestellten) Türelementen zur mechanischen, pneumatischen oder elektrischen Bedienung (Ansteuerung bzw. Betätigung) der Flugzeugtür liegen, wobei diese Türelemente mit als Bestandteil der Türstruktur 3.1 aufzufassen sind.
Oberhalb der Bodenstruktur 5 sind in den unteren (bodennahen) Bereich beiderseitig der Seitenkanten der Türstruktur 3.1 seitlich Tür-Luftaustrittsöffnungen 10 eingelassen, so daß die (oberhalb der Türverkleidung 3.3 befindliche) Verkleidungsspalte 6, auf die später eingegangen wird, luftströmungstechnisch über die Hohlräume mit den Tür-Luftaustrittsöffnungen 10 verbunden ist.
Im geschlossenen und arretierten (verriegelten) Zustand der Flugzeugtür 3 gegen den Türrahmen 2 schließt die Beplankung 3.2 oberflächenkonform mit der äußeren Rumpfhaut des Flugzeuges und die Türverkleidung 3.3 nahezu oberflächenkonform mit der Kabinenverkleidung des Flugzeuges ab. Dabei überdecken die Beplankung 3.2 und die Türverkleidung 3.3 randseitlich die Türstruktur 3.1, so daß sich zwischen der Tragkonstruktion des Türrahmens 2 und der Türstruktur 3.1 eine Türspalte 7 [spaltartige (kanalartige) Öffnungl ergibt, deren Querschnitt durch den randseitlichen Abstand zwischen der Türstruktur 3.1 und dem Türrahmen 2 einerseits und zwischen der Beplankung 3.2 und der Türverkleidung 3.3 andererseits bestimmt ist.

Gegenüber der äußeren Umgebung (Außenumgebung des Flugzeuges) und inneren Umgebung (Rumpfinnenraum des Flugzeuges) wird die Flugzeugtür 3 gegen den Türrahmen 2 durch formschlüssig isolierende Dichtelemente isoliert. Die beiden Dichtelemente (Innenverkleidungsdichtung 4.1, Türdichtung 4.2) sind randseitig der Flugzeugtür 3 bzw. randseitig dem betreffenden Türrahmen- Ständer fest aufgebracht und umlaufend der Türrahmen-Tragkonstruktion bzw. der Beplankung 3.2 streifenförmig befestigt. Beispielgemäß ist eine Innenverkleidungsdichtung 4.1 (als erstes Dichtelement) streifenförmig und randseitig entlang der (zum offenen Türteilbereich gerichteten) Innenfläche des Türrahmens 2 (der Türrahmen-Tragkonstruktion) befestigt, um gegen die gegenüberliegenden Seitenkanten der Türverkleidung 3.3 der geschlossenen Flugzeugtür 3 zu dichten.

Weiterhin ist eine Türdichtung 4.2 (als zweites Dichtelement) streifenförmig und randseitig entlang der Innenfläche der äußeren Beplankung 3.2 befestigt, um gegen die nach außerhalb des Flugzeuges gerichtete Seitenfläche des Türrahmens 2 der geschlossenen Flugzeugtür 3 zu dichten.

Auf der Basis der vorgezogenen Ausführungen wird ergänzt, daß nach der Fig.1 der obere randseitliche Bereich der Türverkleidung 3.3 eine Verkleidungsspalte 6 aufweist, die oberhalb des darunter geführten Querschnittsbereiches der Türspalte 7 liegen. Der randseitlich die Türstruktur 3.1 umfänglich eingeschlossene Querschnitt der Türspalte 7 ist, wie vorher angedeutet - und aus Fig.3 deutlich erkennbar -, durch die Türverkleidung 3.3 gegenüber dem Innenbereich der Rumpfstruktur des Flugzeuges mit Hilfe der ersten Innenverkleidungsdichtung 4.1 (im geschlossenen Zustand der Flugzeugtür 3) abgeschottet.

In der Fig.2 wird das Detail A des Flugzeugtürbereiches nach Fig.1 mit besonderer Darstellung eines Luftkanals 8, der nach dem Unterflurbereich 9 des Flugzeuges führt, dargestellt. Er ist in den Querschnitt des Türrahmen 2 (links- und rechtsseitig der Türrahmen-Ständer) eingelassen. Die den Seitenkantenbereichen der Türstruktur 3.1 (vorerwähnten) eingefaßten Tür-Luftaustrittsöffnung(en) 10 sind auch in dieser Darstellung angedeutet.

In der Fig.3 wird der Schnitt A - A des Flugzeugtürbereiches nach Fig.1, der den vorbeschriebenen Aufbau des Flugzeugtürbereiches und die integrierte Lage des Luftkanales 8 im Türrahmen 2 (beispielsweise nach Fig.2) veranschaulicht. Danach ist der Luftkanales 8 durch den Querschnitt der Türrahmen-Tragkonstruktion (des betreffenden Türrahmen-Ständers) geführt. Er mündet nahe und oberhalb der Bodenstruktur 5 seitwärts des Türrahmens 2 in die Türspalte 7. Unterhalb der Bodenstruktur 5 ist er in den Unterflurbereich 9 geführt.

Der Luftkanal 8 ist in praxi rohrförmig ausgeführt. Er weist eine rechtwinklig gebogenene Gestalt auf, wobei der in die Türspalte 7 mündende Einlaßteil des Luftkanals 8 nahezu parallel der Rumpflängsachse des Flugzeuges verläuft, dem sich nach seiner rechtwinkligen Biegung der nachgeordnete Auslaßteil anschließt, welcher in den Unterflurbereich 9 geführt ist.

Aus dieser Darstellung läßt sich entnehmen, daß der Türrahmen 2 beispielsweise zusätzlich mit einer rechtwinklig abgewinkelten Türrahmenverkleidung 2.1 verkleidet sein kann. Gemäß dieser Ausführung ist dann die gegen die Seitenkante der Türverkleidung 3.3 dichtende Innenverkleidungsdichtung 4.1 oberhalb der Türrahmenverkleidung 2.1, die entlang der (zum offenen Türteilbereich gerichteten) Innenfläche des Türrahmens 2 (der Türrahmen-Tragkonstruktion) befestigt ist, angeordnet.

Abschließend wird ergänzt, daß die Verkleidungsspalte 6 warme Kabinen- bzw. Cockpitluft hinter die Verkleidungen führen. Dabei teilt sich der dem inneren Bereich des Flugzeugrumpfes (Kabinen- bzw. Cockpitbereich) abgesaugte Luftstrom in zwei Teilluftströme (links / rechts) auf, die dann dem Luftkanaleinlaß des Luftkanals 8 zuströmen und über den Luftkanalauslaß des Luftkanals 8 in den Unterflurbereich 9 des Flugzeugrumpfes geleitet werden. Durch diese Maßnahme wird erreicht, daß man - ohne zusätzliche Einleitung von Wärmeenergie in den Flugzeugtürbereich - die Oberflächentemperaturen auf einer Flugzeugtür deutlich erhöht.

Die durch den kanalartigen Querschnitt der Türspalte 7 anteilig geführte warme Kabinen- bzw. Cockpitluft verhindert zusätzlich stärkere Auskühlung der Türoberfläche, da die auf den Randbereich der Türstruktur 3.1 einwirkende warme Luft die Oberflächentemperatur der Flugzeugtür 3 stabilisiert und den ungünstigen Einfluß kalter Luftströmung (infolge der erwähnten Temperaturdifferenz) in diesem (Rand-) Abschnitt verhindert. Ein mit dem kanalartigen Querschnitt der Türspalte 7 gebildeter " Air Drain Channel " übt keinen negativen Einfluß auf die Wärmelasten innerhalb der Flugzeug-Rumpfstruktur aus.

Mit der gezielten Führung der zwangsentlüfteten warmen Luft gemäß dem vorgestellten Beispiel wird erreicht, daß die thermischen Verhältnisse der Türbereiche des Flugzeuges für nahe einer Flugzeugtür sitzende Passagiere günstig beeinflußt werden, ohne daß der Einsatz weiterer Wärmespender, beispielsweise der Einbau einer beheizten Fußbodenplatte im Flugzeugtürbereich, notwendig wird. Die Lösung vermeidet den Gebrauch von zusätzlicher Energie (unterschiedlicher Art, beispielsweise elektrischer oder pneumatischer Energie), wodurch das vorhandene Gesamtenergiepotential des Flugzeuges unverändert bleibt. Die Realisierung der Maßnahme schließt die Verwendung mechanisch beanspruchten Teile aus, wodurch keine Erhöhung des Wartungsaufwandes eintritt. Letztlich hilft die Maßnahme auch Kosten sparen, da auf die Installation aufwendiger örtlicher Meßstellen im Flugzeugtürbereich und der ihnen nachgeordneten Kontroll- und Regeleinrichtungen verzichtet werden kann, um damit die (nur mittels zusätzlich installierter Wärmegerätetechnik) erreichten verbesserten thermischen Verhältnisse abzusichern.

### Bezugszeichen

- 1: Flugzeugrumpfstruktur

- 2: Türrahmen
- 2.1: Türrahmenverkleidung

- 3: Flugzeugtür
- 3.1: Türstruktur
- 3.2: Beplankung
- 3.3: Türverkleidung

- 4.1: Innenverkleidungsdichtung; erstes Dichtelement
- 4.2: Türdichtung; zweites Dichtelement

- 5: Bodenstruktur

- 6: Verkleidungsspalte

- 7: Türspalte; Öffnung, spaltartig

- 8: Luftkanal; rohrförmig

- 9: Unterflurbereich

- 10: Tür-Luftaustrittsöffnung

## Patentansprüche

1. Flugzeugtürbereich mit einem Führungssystem von Luftströmen, der durch einen Türrahmen (2), der oberhalb einer Bodenstruktur (5), die den entlüfteten Unterflurbereich (9) eines Flugzeuges überdeckt, im Bereich eines Türausschnittes einer Flugzeugrumpfstruktur (1) formschlüssig eingepaßt ist, und eine Flugzeugtür (3), die innerhalb eines durch den Türrahmen (2) begrenzten offenen Türteilbereiches, angeordnet ist und sich nach außerhalb des Flugzeugrumpfes schwenken läßt, bestimmt ist, wobei die Flugzeugtür (3), die eine Türstruktur (3.1) mit fest aufgesetzter äußerer Beplankung (3.2) und einer inneren Türverkleidung (3.3) aufweist, im vollständig geschlossenen und verriegelten Zustand gegen den Türrahmen (2) durch zwischen den beiden formschlüssig anliegende Dichtelemente (4) gegenüber der äußeren und inneren Umgebung isoliert ist, deren Türstruktur (3.1) mit luftströmungstechnisch durchgehenden Hohlräumen durchsetzt ist, und wobei sich oberhalb der Türverkleidung eine Verkleidungsspalte (6) zur Zwangsventilierung befindet, die teilweise durch die Hohlräume der Türstruktur entlüftet wird,
**dadurch gekennzeichnet, da**ß zwischen der Türstruktur (3.1) und dem Türrahmen (2) im geschlossenen Zustand der Flugzeugtür (3) eine Türspalte (7) abgeschottet liegt, deren Querschnitt durch den randseitlichen Abstand einerseits zwischen der Türstruktur (3.1) und dem Türrahmen (2) und andererseits zwischen der Beplankung (3.2) und der Türverkleidung (3.3) bestimmt ist, die den Transport eines weiteren Teiles der durch eine Verkleidungsspalte (6) entlüfteten Luft realisiert, daß ein in den Türrahmen (2) eingelassener Luftkanal (8) zur Ableitung der durch die Türspalte (7) und durch die Hohlräume der Türstruktur (3.1) transportierten Luft abgezweigt ist, der nahe und oberhalb der Bodenstruktur (5) seitwärts des Türrahmens (2) in die Türspalte (7) mündet und unterhalb der Bodenstruktur (5) in den Unterflurbereich (9) geführt ist.

2. Flugzeugtürbereich nach Anspruch 1, **dadurch gekennzeichnet, daß** die Dichtelemente eine Streifenform besitzen, wobei ein als Innenverkleidungsdichtung (4.1) ausgeführtes erstes Dichtelement streifenförmig und randseitig entlang der Innenfläche des Türrahmens (2) befestigt ist, um gegen die Seitenkanten der Türverkleidung (3.3) der geschlossenen Flugzeugtür (3) zu dichten, und ein als Türdichtung (4.2) ausgeführtes zweites Dichtelement streifenförmig und randseitig entlang der Innenfläche der äußeren Beplankung (3.1) befestigt ist, um gegen die nach außerhalb des Flugzeuges gerichtete Seitenfläche des Türrahmens (2) der geschlossenen Flugzeugtür (3) zu dichten, derart, daß der in die Türspalte (7) mündende Einlaß des Luftkanals (8) luftströmungstechnisch zwischen der Türverkleidungsdichtung (4.1) und der Türdichtung (4.2) angeordnet ist.

3. Flugzeugtürbereich nach Anspruch 1, **dadurch gekennzeichnet, daß** der Luftkanal (8) eine rechtwinklig gebogenene Gestalt aufweist, wobei der in die Türspalte (7) mündende Einlaßteil des Luftkanals (8) den nahezu parallelen Verlauf der Rumpflängsachse des Flugzeuges bezieht, dem sich der in den Unterflurbereich (9) geführte rechtwinklig nachgeordnete Auslaßteil des Luftkanals (8) anschließt.

4. Flugzeugtürbereich nach Anspruch 1, **dadurch gekennzeichnet, daß** der Türrahmen (2) mit einer rechtwinklig abgewinkelten Türrahmenverkleidung (2.1) verkleidet ist, und daß oberhalb des auf der Innenseite des Türrahmens (2) befestigten Bereiches der Türrahmenverkleidung (2.1) die gegen die Türverkleidung (3.3) dichtende Innenverkleidungsdichtung (4.1) angeordnet ist.

## Revendications

1. Porte d'aéronef avec système de guidage pour écoulement d'air déterminé par un châssis de porte (2) inséré avec adhérence dans la zone d'une section de porte d'une structure de fuselage d'avion (1), au-dessus d'une structure de plancher (5) recouvrant la zone de sous-plancher (9) aérée d'un aéronef, par une porte d'avion (3) disposée à l'intérieur d'une zone partielle de porte ouverte délimitée par le châssis de porte et capable de pivoter vers l'extérieur du fuselage d'aéronef, la porte d'aéronef (3) présentant une structure de porte (3.1) avec bordé extérieur (3.2) fermement appliqué et revêtement de porte intérieur (33) ayant été isolée de l'environnement extérieur et intérieur, en position entièrement fermée et verrouillée contre le châssis de porte, par l'intermédiaire d'éléments de joint (4) reposant avec adhérence entre le bordé et le revêtement (2), la structure de porte (3.1) ayant été traversée par des espaces creux perforés à l'aide de techniques d'écoulement d'air, une fissure de revêtement destinée à la ventilation forcée étant située au-dessus du revêtement de porte, ladite fente étant aérée partiellement par les espaces creux de la structure de porte (3.1),
**caractérisée en ce qu'**une fente de porte (7) est cloisonnée entre la structure de porte (3.1) et le châssis de porte (2), lorsque la porte d'aéronef (3) est fermée. La section transversale de ladite fente est déterminée par l'écartement marginal entre, d'une part, la structure de porte (3.1) et le châssis de porte (2) et d'autre part le bordé (3.2) et le revêtement de porte (3.3) procédant au transport d'une autre partie de l'air aéré via une fente de revêtement (6), **en ce qu'**un canal d'air (8) inséré dans le châssis de porte (2) a été dérivé afin de dévier l'air transporté à travers la fente de porte (7) et les espaces creux de la structure de porte (3.1), ledit canal d'air débouchant dans la fente de porte (7), près de et au-dessus de la structure de plancher (5), latéralement par rapport au châssis de porte (2) et ayant été guidé dans la zone de sous-plancher (9), sous la structure de plancher.

2. Porte d'aéronef selon la revendication 1, **caractérisée en ce que** les éléments de jointoiement sont lamelliformes, un premier élément de jointoiement exécuté sous la forme d'un joint de revêtement interne (4.1) ayant été fixé sous la forme d'une lamelle et marginalement le long de la surface interne du châssis de porte (2), afin de jointoyer contre les bords latéraux du revêtement (3.3) de la porte d'aéronef (3) fermée, et un deuxième élément de jointoiement exécuté sous la forme d'un joint de porte (4.2) ayant été fixé sous la forme de lamelles et marginalement le long de la surface interne du bordé externe (3.1), pour jointoyer contre la surface latérale du châssis (2) de la porte d'aéronef (3) fermée orientée vers l'extérieur de l'avion, de telle sorte que l'entrée du canal d'air (8) débouchant dans la fente de porte (7) soit disposée avec des techniques d'écoulement d'air entre le joint du revêtement de porte (4.1) et le joint de la porte (4.2).

3. Porte d'aéronef selon la revendication 1, **caractérisée en ce que** le canal d'air (8) a une forme voûtée rectangulaire, la composante d'admission du canal d'air (8) débouchant dans la fente de porte (7) couvrant l'étendue presque parallèle de l'axe longitudinal du fuselage de l'aéronef, la composante d'évacuation du canal d'air (8) disposée perpendiculairement en aval et guidée dans la zone de sous-plancher (9) joignant la composante d'admission.

4. Porte d'aéronef selon la revendication 1, **caractérisée en ce que** le châssis de porte (2) a été recouverte d'un revêtement de châssis de porte à angle perpendiculaire vers le bas (2.1), et **en ce que** le joint de revêtement intérieur (4.1) fermant contre le revêtement de porte (3.3) a été disposé au-dessus de la zone du revêtement du châssis de porte (2.1) fixée sur la face interne du châssis de porte (2).

## Claims

1. Aircraft door region having an airflow conducting system and defined by a door frame (2), which is fitted positively in the region of a door cutout of a fuselage structure (1) above a floor structure (5), which overlaps the evacuated underfloor region (9) of an aircraft, and by an aircraft door (3), which is disposed inside an open door subregion delimited by the door frame (2) and may be swivelled to a point outside of the fuselage, wherein the aircraft door (3), which has a door structure (3.1) consisting of fixed outer panelling (3.2) and an inner door lining (3.3), in the state of being fully closed and locked against the door frame (2) is insulated from the external and internal environment by means of sealing elements (4) applied positively between the two, the door structure (3.1) of which is penetrated by cavities for the passage of air flows, and wherein above the door lining a lining gap (6) for forced ventilation is situated, which is partially evacuated through the cavities of the door structure (3.1), **characterized in that** situated in a bulkheaded manner between the door structure (3.1) and the door frame (2) in the closed state of the aircraft door (3) is a door gap (7), the cross section of which is determined by the marginal distance, on the one hand, between the door structure (3.1) and the door frame (2) and, on the other hand, between the panelling (3.2) and the door lining (3.3) and which realizes the transfer of a further portion of the air evacuated through a lining gap (6), that an air duct (8) let into the door frame (2) for removing the air transferred through the door gap (7) and through the cavities of the door structure (3.1) is branched off, which opens close to and above the floor structure (5) sidewards of the door frame (2) into the door gap (7) and extends below the floor structure (5) into the underfloor region (9).

2. Aircraft door region according to claim 1, **characterized in that** the sealing elements have a strip shape, wherein a first sealing element designed as an inner lining seal (4.1) is strip-shaped and fastened along the edge of the inner surface of the door frame (2) in order to effect sealing against the side edges of the door lining (3.3) of the closed aircraft door (3), and a second sealing element designed as a door seal (4.2) is strip-shaped and fastened along the edges of an inner surface of the outer panelling (3.1) in order to effect sealing against the side surface, directed towards the outside of the aircraft, of the door frame (2) of the closed aircraft door (3), such that the inlet of the air duct (8) opening into the door gap (7) is disposed, in terms of air flow, between the door lining seal (4.1) and the door seal (4.2).

3. Aircraft door region according to claim 1, **characterized in that** the air duct (8) has a shape bent at right angles, wherein the inlet part of the air duct (8) extending into the door gap (7) adopts the almost parallel course of the fuselage longitudinal axis of the aircraft and is subsequently adjoined at right angles by the outlet part of the air duct (8), which extends into the underfloor region (9).

4. Aircraft door region according to claim 1, **characterized in that** the door frame (2) is lined with a 90° offset door frame lining (2.1), and that disposed above the region of the door frame lining (2.1) fastened to the inside of the door frame (2) is the inner lining seal (4.1), which effects sealing against the door lining (3.3).
